# EUROPÄISCHE PATENTANMELDUNG

(11) **EP 3 415 056 A1**
(43) Veröffentlichungstag der Anmeldung: **19.12.2018**
(21) Anmeldenummer: 17176266.9
(22) Anmeldetag: 15.06.2017
(51) Int. Cl.: A47J 36/02, A47J 36/24, B65B 25/22, B65D 51/28, A23L 23/00, B65D 25/08

(54) **DECKELTEIL FÜR EINEN BEHÄLTER ZUR SCHNELLEN WARMVERPFLEGUNG**

(71) Anmelder: Heatis AG, 8952 Schlieren (CH)
(72) Erfinder: ANDRETTA, Carlo, CH-8142 Uitikon-Waldegg (CH)
(74) Vertreter: Schmauder & Partner AG Patent- & Markenanwälte VSP

(57) **Zusammenfassung**

Ein Deckelteil (4) für einen Behälter für schnelle Warmverpflegung umfasst ein kuppelförmiges Deckelgehäuse (24) und eine untere Trennfolie (26), welche zusammen einen mediumdichten Deckel-Hohlraum (28) bilden. Das Deckelgehäuse ist mit einer freigebbaren Entnahmeöffnung (30) versehen, und die Trennfolie ist zur Bildung eines mediumdichten oberen Abschlusses eines zugeordneten Bodenteils (2) des Behälters vorgesehen. Der Deckelteil weist eine von aussen betätigbare mediumdichte Reissvorrichtung (38) zum Entfernen eines mittigen Teils (40) der Trennfolie auf.

## Beschreibung

### Technisches Gebiet

Die Erfindung betrifft einen Deckelteil für einen Behälter zur schnellen Warmverpflegung sowie einen damit ausgestatten Behälter.

### Stand der Technik

Es entspricht den Bedürfnissen der heutigen Arbeits- und Lebensweise, möglichst überall und jederzeit eine qualitativ hochwertige Warmverpflegung bereitstellen zu können. Dabei sind im vorliegenden Zusammenhang unter dem Begriff "Verpflegung" sowohl Nahrungsmittel wie auch Getränke zu verstehen, die in dünn- oder dickflüssiger Form vorliegen. Dementsprechend umfasst "Warmverpflegung" im vorliegenden Zusammenhang verschiedenste warme Getränke wie Kaffee, Tee und Milchgetränke, aber auch warme flüssige Mahlzeiten wie insbesondere Suppen und dergleichen. Das Attribut "schnell" ist im vorliegenden Zusammenhang so zu verstehen, dass die Bereitstellung einer Verpflegungsportion einschliesslich des Aufwärmens höchstens einige Minuten dauern soll.

Es gibt bereits verschiedenartige Behälter für schnelle Warmverpflegung, die wenigstens teilweise auch in der Patentliteratur beschrieben sind. Insbesondere wird auf die EP 2674082 A1 sowie auf den dort zitierten Stand der Technik verwiesen.

Der in der EP 2674082 A1 beschriebene Behälter weist einen Bodenteil und einen darauf angeordneten Deckelteil auf, wobei die besagten Teile zusammen einen mediumdichten Hohlraum für eine aufzuheizende Verpflegungsportion bilden. Der Bodenteil weist ein in den Hohlraum ragendes primäres Wärmeübertragungselement auf, welches zum Aufheizen einer im Hohlraum befindlichen Komponente der Verpflegungsportion ausgebildet ist. Gemäss einer Ausgestaltung des bekannten Behälters weist der Deckelteil mindestens ein mediumdicht abgeschlossenes Kompartement für die getrennte Aufbewahrung einer weiteren Komponente der Warmverpflegung auf, wobei ein dem Hohlraum zugewandter Bereich des Kompartements von aussen her entfernbar ist, um die aufbewahrte Komponente in Kontakt mit den Hohlraum zu bringen.

### Darstellung der Erfindung

Vor obigem Hintergrund ist eine Aufgabe der vorliegenden Erfindung darin zu sehen, einen verbesserten Deckelteil für einen wie oben beschriebenen Behälter zur schnellen Warmverpflegung bereit zu stellen. Insbesondere soll sich der Deckelteil durch einen vergleichsweise einfachen Aufbau auszeichnen und eine einfache und sichere Handhabbarkeit erlauben.

Eine weitere Aufgabe der Erfindung besteht darin, einen mit dem erfindungsgemässen Deckelteil ausgestatteten Behälter zur schnellen Warmverpflegung bereit zu stellen.

Gelöst werden diese Aufgaben durch einen Deckelteil beziehungsweise einen mit dem Deckelteil ausgestatteten Behälter wie sie die in den unabhängigen Ansprüchen definiert sind.

Der erfindungsgemässe Deckelteil umfasst ein kuppelförmiges Deckelgehäuse und eine untere Trennfolie, welche zusammen einen mediumdichten Deckelteil-Hohlraum bilden. Das Deckelgehäuse ist mit einer freigebbaren Entnahmeöffnung versehen, und die Trennfolie ist zur Bildung eines mediumdichten oberen Abschlusses eines Bodenteilhohlraums des zugeordneten Behälters vorgesehen. Der Deckelteil weist eine von aussen betätigbare mediumdichte Reissvorrichtung zum Entreissen eines mittigen Teils der Trennfolie mit damit einhergehender Vereinigung des Deckel-Hohlraums und des Behälterhohlraums auf.

Der erfindungsgemässe Behälter für schnelle Warmverpflegung umfasst einen wie oben definierten, erfindungsgemässen Deckelteil, der auf einem zugeordneten Bodenteil angeordnet ist, wobei die besagten Teile zusammen einen mediumdichten Hohlraum für eine aufzuheizende Verpflegungsportion bilden. Zumindest der Bodenteil ist aus einem thermoplastischen Kunststoff gebildet. Der Bodenteil weist ein in den Hohlraum ragendes primäres Wärmeübertragungselement auf, welches eine in den Bodenteil gesteckte und mit einer oberen Abschlusskalotte versehene Metallhülse umfasst, die mit dem Bodenteil mediumdicht verbunden ist.

Im vorliegenden Zusammenhang ist der Begriff "mediumdicht" dahingehend zu verstehen, dass das jeweils interessierende flüssige oder pulverförmige Medium an einem Durchtritt gehindert wird. Es versteht sich, dass an diese Dichtigkeit für das wochen- oder monatelange Lagern einer flüssigen Komponente wesentlich höhere Anforderungen gestellt werden als für die kurzzeitige Aufnahme einer bereitgestellten, aufgeheizten Verpflegungsportion, die primär an einem unerwünschten Verschütten gehindert werden soll.

Die Begriffe "oben" und "unten" werden im vorliegenden Zusammenhang in dem Sinn verwendet, wie sie für einen Bodenteil mit darüber angeordnetem Deckelteil zu verstehen sind. Insbesondere beim Transport der noch verschlossenen Behälter können durchaus andere Orientierungen eingenommen werden, die jedoch für die hier verwendete Richtungsbezeichnung unerheblich sind.

Durch die erfindungsgemässen Massnahmen ergibt sich ein Behälter, der sich unter anderem durch einen verbesserte Handhabbarkeit auszeichnet, wobei überdies ein einfacher und kostengünstiger Aufbau, eine hervorragende Wärmeübertragungscharakteristik und eine breite Einsetzbarkeit gegeben sind. Damit lassen sich mit dem erfindungsgemässen Behälter gut lagerfähige und ansprechende, für die verschiedensten Abnehmer konfektionierbare aufheizbare Verpflegungseinheiten bereitstellen. Diese umfassen jeweils einen entsprechend konfigurierten erfindungsgemässen Behälter sowie eine anfänglich aus zwei getrennten Komponenten bestehende Verpflegungsportion bereitstellen. Vorteilhaft ist dabei, dass die beiden Komponenten in anfänglich getrennten Sektionen des Behälterhohlraums untergebracht sind.

Vorteilhafte Ausgestaltungen der Erfindung sind nachfolgend beschrieben und in den abhängigen Ansprüchen definiert.

Bei einer Ausgestaltung (Anspruch 2) ist der mittige Teil der Trennfolie durch eine umlaufende Sollrisslinie definiert. Dadurch lässt sich das Abreissen des mittigen Teils der Trennfolie in sauberer und kontrollierter Weise bewerkstelligen.

Vorteilhaft ist es zudem (Anspruch 3), wenn die Reissvorrichtung einen in den Deckel-Hohlraum ragenden axialsymmetrischen Reisskanal sowie ein darin mediumdicht axialverschiebliches Stöpselglied umfasst, wobei eine Endfläche des Stöpselglieds mit einem zugehörigen Bereich des mittigen Teils der Trennfolie reissfest verbunden ist, und wobei das Stöpselglied mit einem ausserhalb des Reisskanals zugänglichen Betätigungselement versehen ist, mittels welchem das Stöpselglied im Reisskanal von einer inneren Anfangsstellung in eine äussere Endstellung auswärts ziehbar ist, um den mittigen Teil der Trennfolie zu entfernen.

Bevorzugt ist es zudem (Anspruch 4), wenn die Reissvorrichtung mit Mitteln zum Fixieren des Stöpselglieds in der äusseren Endstellung ausgestattet ist. Damit wird ein unerwünschtes Zurückgleiten des Stöpselglieds vermieden. Zu diesem Zweck können einrastende Elemente vorgesehen sein. Für manche Anwendungen wird jedoch die zur Verschiebung des Stöpselglieds zu überwindende Reibungskraft eine ausreichende Fixierung gewährleisten.

Gemäss einer vorteilhaften Ausführungsform (Anspruch 5) ist der Abstand zwischen innerer Anfangsstellung und äusserer Endstellung des Stöpselglieds derart gewählt, dass der mittige Teil der Trennfolie gänzlich im Reisskanal aufnehmbar ist. Dadurch wird vermieden, dass der abgerissene Folienteil noch im Deckelhohlraum verbleibt und sich daran Teile der Verpflegungsportion verhaften.

Weiterhin ist es von Vorteil (Anspruch 6), wenn das Stöpselglied aus einem in den Reisskanal eingepassten kolbenförmigen Endteil und einem auswärts gerichteten stabförmigen Mittelteil gebildet ist. Eine solche Formgebung ist insbesondere auch für die Fertigung aus einem Kunststoffmaterial geeignet.

Bei einer weiteren Ausführungsform (Anspruch 7) ist der stabförmige Mittelteil mit einer Sollbruchstelle zum Abknicken eines in der äusseren Endstellung vorstehenden Abschnitts versehen. Damit wird ein störender Einfluss insbesondere beim direkten Trinken aus dem Behälter vermieden.

Grundsätzlich kann die freigebbare Entnahmeöffnung beispielsweise durch einen Schraubverschluss realisiert werden. Gemäss einer vorteilhaften Ausgestaltung (Anspruch 8) ist die freigebbare Entnahmeöffnung als klappbarer Laschenverschluss ausgebildet.

Bei einer vorteilhaften Ausführungsform (Anspruch 10) des Behälters ist das Wärmeübertragungselement einstückig aus Aluminium gebildet. Damit wird eine hervorragende Wärmeleitung und damit eine optimal kurze Aufheizzeit ermöglicht.

Gemäss einer weiteren Ausführungsform (Anspruch 11) ist der Deckelteil in einem unteren Randbereich auf eine zugeordnete Stirnlippe am oberen Rand des Bodenteils angeschweisst oder angeklebt. Insbesondere kann dabei die Trennfolie sandwichartig zwischen den beiden Teilen fixiert sein.

Bei einer Ausführungsform (Anspruch 12) ist der Bodenteil mit einer ersten Komponente der Verpflegungsportion befüllt und der Deckelteil mit einer zweiten Komponente der Verpflegungsportion befüllt ist.

Gemäss einer Ausführungsform (Anspruch 13) ist die erste Komponente ausgewählt aus Wasser, Milch, Milchersatz und deren Gemische.

Gemäss einer weiteren Ausführungsform (Anspruch 14) ist die zweite Komponente ein in der ersten Komponente löslicher Nahrungsmittelextrakt.

### Wege zur Ausführung der Erfindung

Ausführungsbeispiele der Erfindung werden nachfolgend anhand der Zeichnungen näher beschrieben, dabei zeigen:
- Fig. 1: (a) einen Behälter, bestehend aus einem Bodenteil und einem darauf aufgesetztem Deckelteil, mit intakter Trennfolie, im Längsschnitt; (b) einen Ausschnitt des Deckelteils in vergrösserter Darstellung, im Längsschnitt;
- Fig. 2: den Deckelteil der Fig. 1, im Längsschnitt;
- Fig. 3: den Deckelteil der Fig. 1, in Draufsicht;
- Fig. 4: einen Deckelteil mit eingerissener und hochgezogener Trennfolie, im Längsschnitt;
- Fig. 5: den Deckelteil der Fig. 4, in Draufsicht; und
- Fig. 6: einen Deckelteil mit eingerissener und hochgezogener Trennfolie sowie abgeknicktem oberem Abschnitt, im Längsschnitt.

Im Folgenden werden funktionsäquivalente Komponenten in den verschiedenen Figuren und Ausführungsbeispielen mit ein- und demselben Bezugszeichen versehen.

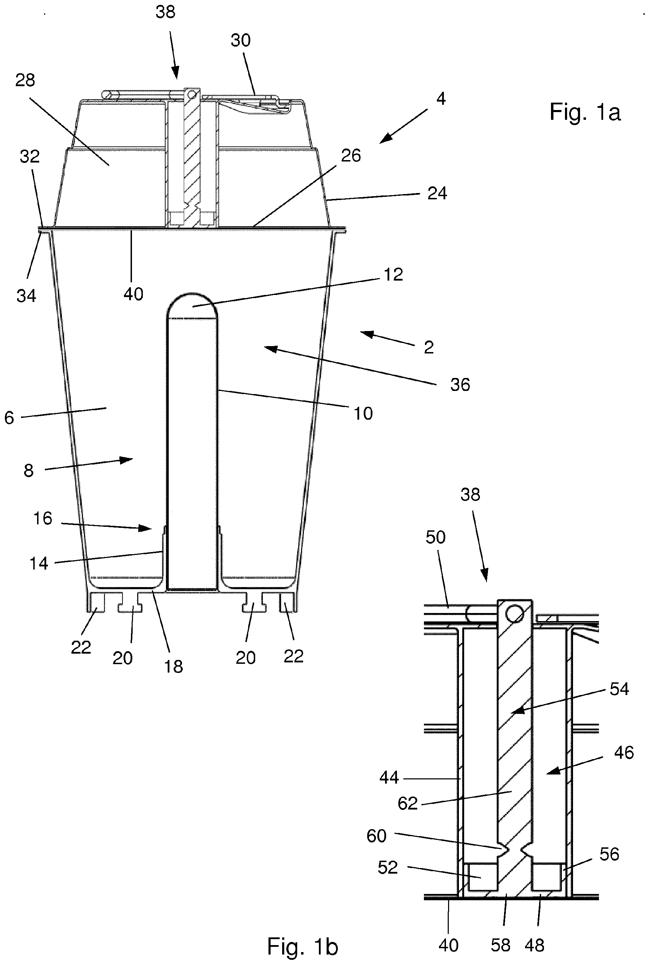

Die Fig. 1 zeigt einen Behälter für schnelle Warmverpflegung, welcher einen an sich bekannten Bodenteil 2 und einen darauf befestigten Deckelteil 4 umfasst.

Der Bodenteil 2 umfasst einen Bodenteil-Hohlraum 6 und ist aus einem thermoplastischen Kunststoff, beispielsweise aus Polypropylen, gebildet. Der Bodenteil weist zudem ein in den Bodenteil-Hohlraum ragendes Wärmeübertragungselement 8 auf. Dieses umfasst eine in den Bodenteil gesteckte Metallhülse 10, die mit dem Bodenteil mediumdicht verbunden und mit einer oberen Abschlusskalotte 12 versehen ist. Die Metallhülse 10 ist im unteren Bereich von einem in den Bodenteil-Hohlraum ragenden Abschnitt 14 des Bodenteils 2 umgeben, wobei zwischen diesen Teilen ein umlaufender mediumdichter Abschluss 16 ausgebildet ist. Im gezeigten Beispiel sind die obere Abschlusskalotte 12 und die Metallhülse 10 einstückig aus Aluminium gebildet.

Da der Behälter zum Aufsetzen auf eine zugeordnete Heizstation vorgesehen ist, ist der Bodenteil 2 zweckmässigerweise mit einer im Wesentlichen planaren Bodenfläche 18 ausgestattet. Diese Bodenfläche ist im vorliegenden Beispiel mit zwei nach unten vorstehenden T-förmig ausgebildeten Zapfen 20 versehen. Diese Rastvorsprünge sind zur Zusammenwirkung mit entsprechenden Rastausnehmungen einer zugehörigen Heizstation vorgesehen und können als Identifikationsmittel und oder als Befestigungsmittel verwendet werden. Weiterhin ist die Bodenfläche im gezeigten Beispiel mit zwei nach unten vorstehenden, kreissegmentförmigen Wandabschnitten 22 ausgestattet, die zum Einfahren in zugehörige Führungsschlitze einer Heizstation vorgesehen sind und dadurch als zusätzliche mechanische Stabilisierung dienen.

Die Herstellung des Bodenteils kann beispielsweise wie in der EP 2674082 A1 erläutert erfolgen. Ebenso kann zur Beheizung des Inhalts eine Heizstation gemäss der EP 2674082 A1 verwendet werden.

Der Deckelteil 4 umfasst ein kuppelförmiges Deckelgehäuse 24 und eine untere Trennfolie 26, welche zusammen einen mediumdichten Deckel-Hohlraum 28 bilden. Darüber hinaus ist das Deckelgehäuse mit einer freigebbaren Entnahmeöffnung 30 versehen. Diese Entnahmeöffnung ist dafür vorgesehen, die im Behälter vorgängig bereitgestellte Warmverpflegung, beispielsweise ein heisses Getränk, aus dem Behälter zu entnehmen. Im gezeigten Beispiel ist die Entnahmeöffnung als klappbarer Laschenverschluss ausgebildet. Derartige Verschlüsse sind für Getränkedosen wohlbekannt und werden auch als "Stay-on Tabs" bezeichnet.

Wie in der Fig. 1 ersichtlich, bildet die Trennfolie 26 einen mediumdichten oberen Abschluss des zugeordneten Bodenteils 2 des Behälters. Vorzugsweise ist die Trennfolie aus einem Aluminiumfolie gebildet, die zumindest teilweise mit einer Thermoplastschicht versehen ist. Zweckmässigerweise handelt es sich dabei um das Thermoplastmaterial, aus dem der Bodenteil 2 gebildet ist, beispielsweise Polypropylen oder Polyethylen. Im gezeigten Beispiel ist die Trennfolie 26 zwischen einer unteren Stirnlippe 32 des Deckelgehäuses 24 und einer oberen Stirnlippe 34 des Bodenteils 2 angeordnet und mit diesen Stirnlippen verschweisst oder verklebt.

Wie ebenfalls aus der Fig. 1 ersichtlich, bilden der Deckel-Hohlraum 28 und der Bodenteil-Hohlraum 6 einen durch die Trennfolie 26 unterteilten Gesamthohlraum 36 des Behälters.

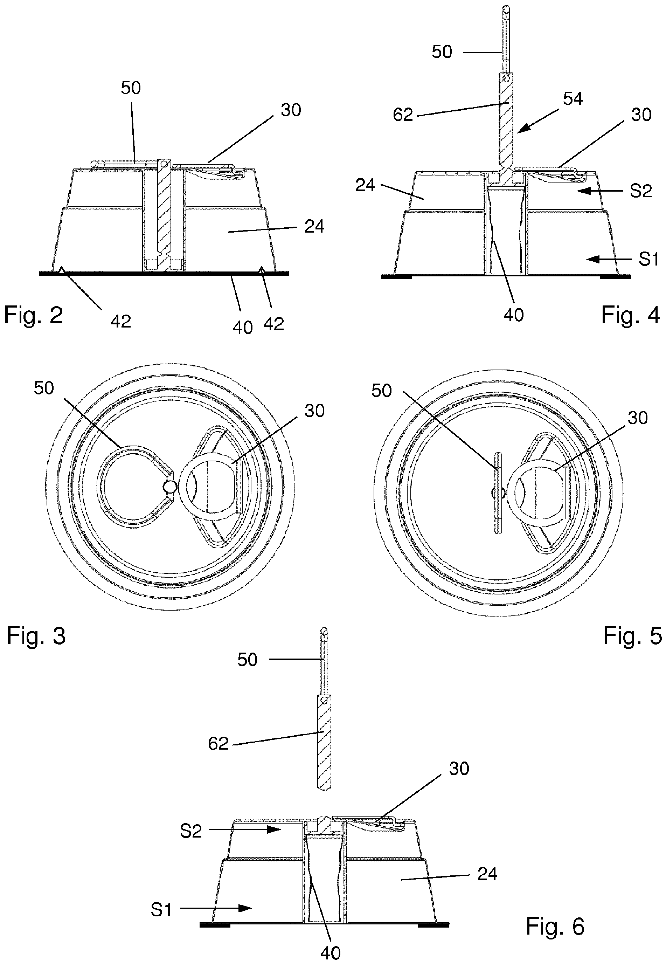

Weiterhin ist der Deckelteil 4 mit einer von aussen betätigbaren mediumdichten Reissvorrichtung 38 zum Entfernen eines mittigen Teils 40 der Trennfolie 26 ausgestattet. Zur Vereinfachung des Entfernungsvorgangs ist es vorteilhaft, wie im Beispiel der Fig. 2 dargestellt, die Trennfolie 26 mit einer umlaufenden Sollrissline 42 zu versehen, welche den mittigen Teil 40 definiert und ihn leichter abreissbar macht.

Wie insbesondere aus der Fig. 1b ersichtlich, umfasst die Reissvorrichtung 38 einen in den Deckel-Hohlraum 28 ragenden axialsymmetrischen Reisskanal 44 sowie ein darin mediumdicht axialverschiebliches Stöpselglied 46, wobei eine Endfläche 48 des Stöpselglieds mit einem zugehörigen Bereich des mittigen Teils 40 der Trennfolie 26 reissfest verbunden ist. Das Stöpselglied 46 ist mit einem ausserhalb des Reisskanals 44 zugänglichen Betätigungselement 50 versehen, mittels welchem das Stöpselglied im Reisskanal von einer inneren Anfangsstellung S1 in eine äussere Endstellung S2 auswärts ziehbar ist, um dadurch den am Stöpselglied befestigten mittigen Teil 40 der Trennfolie 26 zu entfernen. Im gezeigten Beispiel umfasst das Stöpselglied 46 einen in den Reisskanal 44 passenden kolbenförmigen Endteil 52 und einen auswärts gerichteten stabförmigen Mittelteil 54. Der kolbenförmige Endteil ist becherartig ausgebildet und umfasst demnach eine von einer Aussenwandung 56 umgebene Endplatte 58, die im mittigen Bereich an den stabförmigen Mittelteil 54 angeformt ist.

Wie insbesondere aus der Fig. 6 ersichtlich, ist der stabförmige Mittelteil 54 mit einer Sollbruchstelle 60 zum Abknicken oder Abreissens eines in der äusseren Endstellung S2 vorstehenden Abschnitts 62 versehen.

Die Verwendung des erfindungsgemässen Behälters wird nachfolgend beispielhaft erläutert. Der Behälter liegt anfänglich wie in Fig. 1 dargestellt vor, wobei der Bodenteil 2 mit einer ersten Komponente der Verpflegungsportion, beispielsweise mit Wasser, befüllt ist und wobei der Deckelteil 4 mit einer zweiten Komponente der Verpflegungsportion, beispielsweise mit einem löslichen Nahrungsmittelextrakt, befüllt ist.

In der Folge wird ein Heizvorgang durchgeführt wie dies beispielsweise in der EP 2674082 A1 beschrieben ist. Damit liegt nun im Bodenteil eine Portion heissen Wassers vor. Nun wird wie in den Fig. 2 und 3 dargestellt die Reissvorrichtung 38 betätigt. Dabei wird der mit einem Greifring 64 versehene endständige Abschnitt 62 des Stöpselglied 46 ergriffen und auswärts bzw. nach oben gezogen. Dadurch wird das Stöpselglied von der inneren Anfangsstellung S1 in die äussere Endstellung S2 verschoben und der mittige Teil 40 der Trennfolie 10 in den Reisskanal 44 hochgezogen. Durch das Entfernen des mittigen Teils sind nunmehr der Deckel-Hohlraum 28 und der Bodenteil-Hohlraum 6 zu einem Gesamthohlraum 36 vereinigt. Mit anderen Worten fällt nun der im Deckelteil 4 befindliche Nahrungsmittelextrakt in das darunter befindliche Heisswasser. Es kann nun auch der Behälter zur Durchmischung der beiden Komponenten geschüttelt werden. Für die anschliessende Entnahme der fertiggestellten Verpflegungsportion nach Aufklappen der Entnahmeöffnung 30 entnommen werden.

## Patentansprüche

1. Deckelteil für einen Behälter für schnelle Warmverpflegung, wobei der Deckelteil (4) ein kuppelförmiges Deckelgehäuse (24) und eine untere Trennfolie (26) umfasst, welche zusammen einen mediumdichten Deckel-Hohlraum (28) bilden, wobei das Deckelgehäuse mit einer freigebbaren Entnahmeöffnung (30) versehen ist und die Trennfolie zur Bildung eines mediumdichten oberen Abschlusses eines zugeordneten Bodenteils (2) des Behälters vorgesehen ist, **dadurch gekennzeichnet, dass** der Deckelteil eine von aussen betätigbare mediumdichte Reissvorrichtung (38) zum Entfernen eines mittigen Teils (40) der Trennfolie aufweist.

2. Deckelteil nach Anspruch 1, wobei der mittige Teil der Trennfolie (26) durch eine umlaufende Sollrisslinie (42) definiert ist.

3. Deckelteil nach Anspruch 1 oder 2, wobei die Reissvorrichtung (38) einen in den Deckel-Hohlraum (28) ragenden axialsymmetrischen Reisskanal (44) sowie ein darin mediumdicht axialverschiebliches Stöpselglied (46) umfasst, wobei eine Endfläche (48) des Stöpselglieds mit einem zugehörigen Bereich des mittigen Teils (40) der Trennfolie (26) reissfest verbunden ist, und wobei das Stöpselglied mit einem ausserhalb des Reisskanals zugänglichen Betätigungselement (50) versehen ist, mittels welchem das Stöpselglied im Reisskanal von einer inneren Anfangsstellung (S1) in eine äussere Endstellung (S2) auswärts ziehbar ist, um den mittigen Teil der Trennfolie zu entfernen.

4. Deckelteil nach Anspruch 3, wobei die Reissvorrichtung mit Mitteln zum Fixieren des Stöpselglieds (46) in der äusseren Endstellung (S2) ausgestattet ist.

5. Deckelteil nach Anspruch 3 oder 4, wobei der Abstand zwischen innerer Anfangsstellung (S1) und äusserer Endstellung (S2) des Stöpselglieds (46) derart gewählt ist, dass der mittige Teil (40) der Trennfolie (26) gänzlich im Reisskanal (44) aufnehmbar ist.

6. Deckelteil nach einem der Ansprüche 3 bis 5, wobei das Stöpselglied (46) aus einem in den Reisskanal (44) eingepassten kolbenförmigen Endteil (52) und einem auswärts gerichteten stabförmigen Mittelteil (54) gebildet ist.

7. Deckelteil nach Anspruch 6, wobei der stabförmige Mittelteil (54) mit einer Sollbruchstelle (60) zum Abknicken eines in der äusseren Endstellung (S2) vorstehenden Abschnitts (62) versehen ist.

8. Deckelteil nach einem der Ansprüche 1 bis 7, wobei die freigebbare Entnahmeöffnung (30) als klappbarer Laschenverschluss ausgebildet ist.

9. Behälter für schnelle Warmverpflegung, umfassend einem Deckelteil (4) nach einem der vorangehenden Ansprüche sowie einen darunter befestigten Bodenteil (2), welche zusammen einen durch die Trennfolie in den besagten Deckel-Hohlraum (28) und einen mediumdichten Bodenteil-Hohlraum (6) unterteilten Gesamthohlraum (36) für eine aufzuheizende Verpflegungsportion bilden, und wobei zumindest der Bodenteil aus einem thermoplastischen Kunststoff gebildet ist, wobei der Bodenteil ein in den Bodenteil-Hohlraum ragendes Wärmeübertragungselement (8) aufweist, welches eine in den Bodenteil gesteckte und mit einer oberen Abschlusskalotte versehene Metallhülse (10) umfasst, die mit dem Bodenteil mediumdicht verbunden ist.

10. Behälter nach Anspruch 9, wobei das Wärmeübertragungselement (8) einstückig aus Aluminium gebildet ist.

11. Behälter nach Anspruch 9 oder 10, wobei der Deckelteil in einem unteren Randbereich (32) auf eine zugeordnete Stirnlippe (34) am oberen Rand des Bodenteils (2) angeschweisst oder angeklebt ist.

12. Behälter nach einem der Ansprüche 9 bis 11, wobei der Bodenteil (2) mit einer ersten Komponente der Verpflegungsportion befüllt ist und wobei der Deckelteil (4) mit einer zweiten Komponente der Verpflegungsportion befüllt ist.

13. Behälter nach Anspruch 12, wobei die erste Komponente ausgewählt ist aus Wasser, Milch, Milchersatz und deren Gemische.

14. Behälter nach Anspruch 12 oder 13, wobei die zweite Komponente ein in der ersten Komponente löslicher Nahrungsmittelextrakt ist.
